# EUROPEAN PATENT SPECIFICATION

(11) **EP 0 416 541 B1**
(45) Date of publication and mention of the grant of the patent: **15.06.1994**
(21) Application number: 90116979.7
(22) Date of filing: 04.09.1990
(51) Int. Cl.: B23H 1/04, B23H 7/22, B23H 1/06

(54) **Electrode for electric discharge machining**
Elektrode für Elektroentladungsbearbeitung
Electrode pour l'usinage par décharge électrique

(30) Priority: 05.09.1989 JP 228376/89; 07.09.1989 JP 104354/89
(43) Date of publication of application: 13.03.1991
(73) Proprietor: SUMITOMO ELECTRIC INDUSTRIES, LTD., Osaka-shi, Osaka 541 (JP); TOKYO TUNGSTEN CO., LTD., Tokyo (JP)
(72) Inventor: Okamoto, Ken-ichi, c/o Toyama Works of Tokyo, Toyama-shi, Toyama-ken (JP); Amitani, Kunio, c/o Toyama Works of Tokyo, Toyama-shi, Toyama-ken (JP); Ohtani, Hitoshi, c/o Toyama Works of Tokyo, Toyama-shi, Toyama-ken (JP); Ezaki, Shigeo, c/o Osaka Works of Sumitomo, Konohana-ku, Osaka (JP)
(74) Representative: Herrmann-Trentepohl, Werner, Dipl.-Ing.

(56) References cited:
- DE-A- 1 615 113
- DE-A- 2 313 167
- SOVIET INVENTIONS ILLUSTRATED,P,Q sections, week E 29, September 1, 1982DERWENT PUBLICATIONS LTD., London P 56 *SU-867589 (TULA POLY).
- SOVIET INVENTIONS ILLUSTRATED,P,Q sections, week E 17, June 9, 1982 DERWENTPUBLICATIONS LTD., London, P 56 *SU-837712 (LOVCHIKOV)

## Description

The present invention relates to electrodes for use in electric discharge machining, and methods of manufacturing thereof.

### Description of the Related Art

Electrodes for electric discharge machining known in the prior art are for example electrodes formed by cutting in a machining process, electrodes using wire rods, and so on. Electrodes for electric discharge machining formed by extruding molded bodies by powder metallurgy processing and sintering the bodies are also well known.

However, such conventional electrodes for electric discharge machining involved the following disadvantages. If a deep hole or a through hole is to be formed in an object to be processed, particles of scratches generated by the processing cannot be removed smoothly, causing the speed of the processing to be slow.

DE-OS 1 615 113 discloses an apparatus for providing longitudinal grooves into workpieces by an electrochemical forming method. Thereby the electrochemical reaction is restricted to the location of the grooves to be formed by a corresponding coating on the tool electrode.

From SU-A 837 712 an electrode for electrochemical removal of burrs from metal is known, which is prepared by moulding graphite or copper-graphite powder and using paraffin wax as a binder.

An electrode preformed from powder materials and used for electro-erosion processing is disclosed in DE-OS 2 313 167. Thereby carrying paths can be provided for supplying and removing the dielectric liquid connecting the electrode and the workpiece.

### SUMMARY OF THE INVENTION

An object of the present invention is to provide an electrode for electric discharge machining in which particles of scratches caused by processing can be removed smoothly and the speed of the processing can be increased.

An electrode for electric discharge machining according to the present invention is an electrode for performing electric discharge machining while feeding an electric discharge machining liquid to an object to be processed and it includes a discharge machining liquid inlet path and a discharge machining liquid outlet path.

In the electrode of the present invention, the discharge processing liquid inlet path is formed by penetrating a hole in a longitudinal direction. The discharge machining liquid outlet path is formed by extending on an external circumferential surface of the electrode in the longitudinal direction.

In a preferred embodiment of the present invention, the electrode has a circular cylinder form. In this embodiment, the discharge machining liquid outlet path may be formed as a groove for example. In this case, the groove may be formed straight or spirally along the longitudinal direction on the outer surface of the electrode.

The discharge machining liquid outlet path may have a flat surface formed on the outer surface of the electrode having a circular cylinder form. The discharge machining liquid can flow on the flat surface so as to be removed.

In the electrode of the present invention, the discharge machining liquid outlet path may be a portion formed by extending on the outer surface of the electrode in the longitudinal direction so as to be a portion depressed inward from the outermost rotating circumferential surface in a machining process by rotating the electrode.

According to another preferred embodiment of the invention, the electrode has a square bar form. In this case, a flat outer surface of the square bar form may be used as the discharge machining liquid outlet path.

According to the present invention, the electrode is not limited to a circular cylinder or a square bar form. It may be a cylinder or bar having an oval form or other form in cross-section.

According to the present invention, the electrode is used in a rotating manner at the time of electric discharge machining. Particularly, if the electrode is not in a circular cylinder form, it is used in a rotating manner. In this case, the through hole as the discharge machining liquid inlet path is formed in a position away from the center of rotation of the electrode. According to the present invention, the discharge machining liquid outlet path may be formed as a plurality of through holes.

The electrode for electric discharge machining according to the present invention includes the discharge machining liquid inlet path formed by a hole penetrated in the longitudinal direction. In consequence, a discharge machining liquid is injected into the discharge machining liquid inlet path, whereby the liquid can be supplied in a gap between the electrode for electric discharge machining and a processed surface of the object. The electrode for electric discharge machining according to the present invention includes the discharge machining liquid outlet path formed by extending on the outer surface of the electrode in the longitudinal direction. In consequence, the discharge machining liquid supplied in the gap between the electrode for electric discharge machining and the processed surface of the object can be removed outside through the discharge machining liquid outlet path. Thus, the present invention makes it possible to smoothly remove particles of scratches caused in the electric discharge machining, together with the discharge machining liquid.

Thus, according to the present invention, if a deep hole or a long through hole is formed in the object to be processed, particles of scratches caused by the processing can be smoothly removed through the hole, which makes it possible to enhance the speed of the processing.

The foregoing and other objects, features, aspects and advantages of the present invention will become more apparent from the following detailed description of the present invention when taken in conjunction with the accompanying drawings

### BRIEF DESCRIPTION OF THE DRAWINGS

Fig. 1A is a side view showing a first embodiment of an electrode for electric discharge machining according to the present invention.
Fig. 1B is a side view showing a second embodiment of an electrode for electric discharge machining according to the present invention.
Fig. 2A is a sectional view showing a third embodiment of an electrode for electric discharge machining according to the present invention.
Fig. 2B is a sectional view showing a fourth embodiment of an electrode for electric discharge machining according to the present invention.
Fig. 2C is a sectional view showing a fifth embodiment of an electrode for electric discharge machining according to the present invention.
Fig. 3A is a sectional view showing a sixth embodiment of an electrode for electric discharge machining according to the present invention.
Fig. 3B is a sectional view showing a seventh embodiment of an electrode for electric discharge machining according to the present invention.
Fig. 3C is a sectional view showing an eighth embodiment of an electrode for electric discharge machining according to the present invention.
Fig. 4 is a sectional view showing a process of electric discharge machining using the electrode of the eighth embodiment shown in Fig. 3C.
Figs. 5A to 5C are sectional views showing further embodiments of an electrode for electric discharge machining according to the present invention

### DESCRIPTION OF THE PREFERRED EMBODIMENTS

First, embodiments of the present invention will be described.

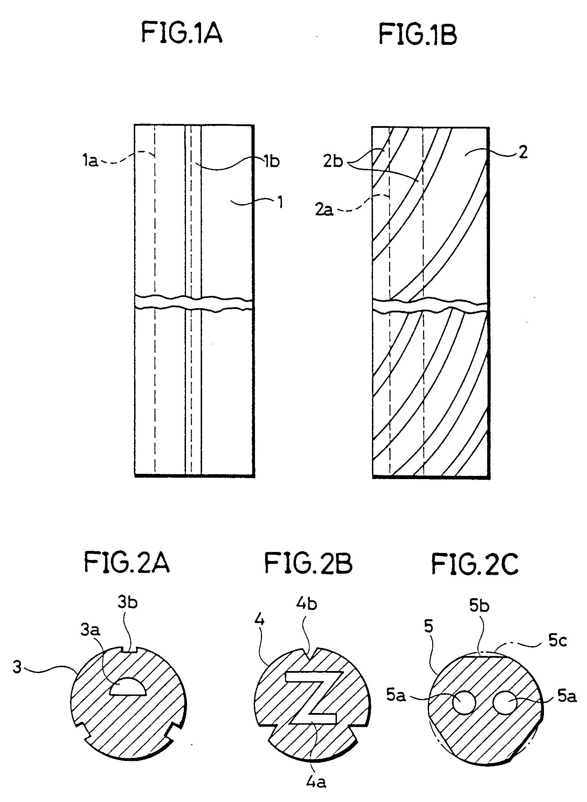

Fig. 1A is a side view showing a first embodiment of an electrode for electric discharge machining according to the present invention. Referring to Fig. 1A, the electrode 1 for electric discharge machining of this embodiment is formed by a circular cylinder. The electrode 1 has a through hole circular in cross-section which serves as a discharge machining liquid inlet path 1a. An outer circumferential surface of the electrode 1 has a groove extending straight in the longitudinal direction which serves as a discharge machining liquid outlet path 1b.

Fig. 1B is a side view showing a second embodiment of an electrode for electric discharge machining according to the present invention. The electrode 2 for electric discharge machining of this embodiment has a through hole circular in cross-section which serves as a discharge machining liquid inlet path 2a. An outer circumferential surface of the electrode 2 is provided with a groove extending spirally in the longitudinal direction which serves as a discharge machining liquid outlet path 2b.

Fig. 2A is a sectional view showing a third embodiment of an electrode for electric discharge machining according to the present invention. Referring to Fig. 2A, the electrode 3 for electric discharge machining is formed by a circular cylinder. The circular cylinder is provided with a hole semi-circular in cross-section and penetrating in the longitudinal direction, which serves as a discharge machining liquid inlet path 3a. The outer circumferential surface of the cylinder has three grooves rectangular in cross-section which serve as discharge machining liquid outlet paths 3b.

Fig. 2B is a sectional view showing a fourth embodiment of an electrode for electric discharge machining according to the present invention. Referring to Fig. 2B, the electrode 4 for electric discharge machining of this embodiment is also formed by a circular cylinder. This circular cylinder has a longitudinally penetrating hole Z-shaped in cross-section which serves as a discharge machining liquid inlet path 4a. The outer circumferential surface of the cylinder is provided with three V-shaped grooves extending straight in the longitudinal direction, which serve as discharge machining liquid outlet paths 4b.

Fig. 2C is a sectional view showing a fifth embodiment of an electrode for electric discharge machining according to the present invention. Referring to Fig. 2C, the electrode 5 for electric discharge machining is formed by a circular cylinder. This circular cylinder is provided with two through holes as discharge machining liquid inlet paths 5a. The outer circumferential surface of the cylinder has three flat surfaces which serve as discharge machining liquid outlet paths 5b. When the electrode 5 for electric discharge machining is rotated, the outermost rotating circumferential surface 5c has a circular form in cross-section and the flat surfaces as the discharge machining liquid outlet paths 5b become portions depressed inward from the circumferential surface 5c of the circular form. When electric discharge machining is performed while the electrode 5 is rotating, a circular hole corresponding to the circumferential surface 5c is opened in the processed object. Consequently, there are gaps between the processed surface of the object and the electrode 5 in the portions of those flat surfaces 5b. The discharge processing liquid is removed through those gaps.

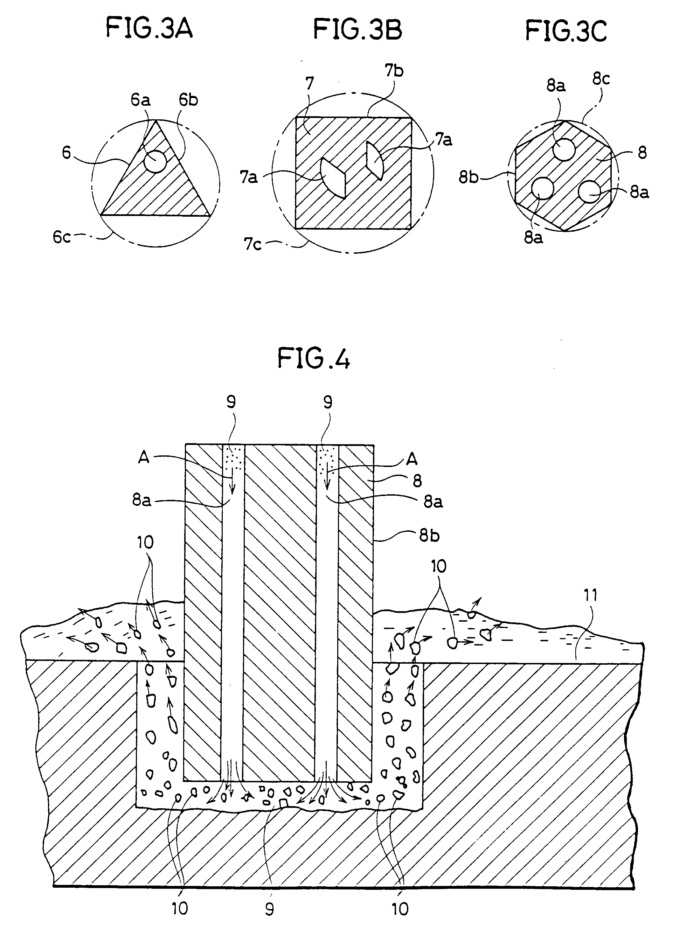

Fig. 3A is a sectional view showing a sixth embodiment of an electrode for electric discharge machining according to the present invention. Referring to Fig. 3A, the electrode 6 for electric discharge machining is formed by a triangular bar. It is provided with a longitudinally penetrating hole circular in cross-section which serves as a discharge machining liquid inlet path 6a. When the electrode 6 for electric discharge machining is rotated, there are flat surfaces 6a depressed inward from the outermost rotating circumferential surface 6c, and those flat surfaces 6a serve as discharge machining liquid outlet paths 6b.

Fig. 3B is a sectional view showing a seventh embodiment of an electrode for electric discharge machining according to the present invention. Referring to Fig. 3B, the electrode 7 for electric discharge machining is formed by a square bar. Two holes fan-shaped in cross-section penetrate the square bar longitudinally so as to form discharge machining liquid inlet paths 7a. When the electrode 7 for electric discharge machining rotates, there are flat outer surfaces 7b depressed inward from the outermost rotating circumferential surface 7c and thus there are gaps between those flat surfaces and the circumferential surface 7c, which serve as discharge machining liquid outlet paths 7b.

Fig. 3C is a sectional view showing an eight embodiment of an electrode for electric discharge machining according to the present invention. Referring to Fig. 3C, the electrode 8 for electric discharge machining is formed by a hexagonal bar. This hexagonal bar has three holes penetrating in the longitudinal direction which serve as discharge machining liquid inlet paths 8a. When the electrode 8 for electric discharge machining rotates, there are flat outer surfaces 8b depressed inward from the outermost rotating circumferential surface 8c and those flat surfaces form discharge machining liquid outlet paths 8b.

The electrode for electric discharge machining according to the present invention is not limited to the forms of the above-mentioned embodiments and it may be formed in various forms. The forms and numbers of the through holes as the discharge machining liquid inlet paths and the grooves as the discharge machining liquid outlet paths are not limited to those of the above-mentioned embodiments. If only one through hole is formed in the electrode for electric discharge machining, it is preferable to form the through hole in a position away from the center of rotation of the electrode for electric discharge machining so that the processed surface of the object may have a protrusion.

The electrode for electric discharge machining according to the present invention can be manufactured for example by a manufacturing method to be described afterwards.

Fig. 4 is a sectional view showing an electric discharge machining process using the electrode for electric discharge machining of the eighth embodiment shown in Fig. 3C. Referring to Fig. 4, the electrode 8 for electric discharge machining is disposed with a small distance from the object 11 to the processed. The electrode 8 is rotated at the time of electric discharge machining. Thus, there are gaps between the flat surfaces 8b as the discharge machining liquid outlet paths and the processed surface of the object 11.

At the time of electric discharge machining, a discharge machining liquid 9 is supplied through the discharge machining liquid inlet paths 8a and the liquid 9 flows to the top end of the electrode 8 for electric discharge machining. In a state in which the discharge machining liquid 9 having an insulating property is supplied between the electrode 8 for electric discharge machining and the object 11 to be processed, several hundreds of intermittent discharges per second occur therebetween, whereby the object 11 is processed.

The discharge machining liquid 9 flows out from the top end surface of the electrode 8 and is supplied in the small gap between the top end surface and the object 11. The discharge machining liquid 9 in this gap is ejected through the small gaps between the outer surfaces of the electrode 8 and the object 11. When discharges occur between the electrode 8 and the object 11, the object 11 as a positive pole is rapidly consumed to generate a large number of scratch particles 10. Those scratch particles 10 together with the discharge machining liquid 9 are ejected from the gaps between the outer surfaces of the electrode 8 and the object 11 to be processed.

If the electrode for electric discharge machining has many through holes as the discharge machining liquid inlet paths, the electrode needs not be rotated at the time of electric discharge machining.

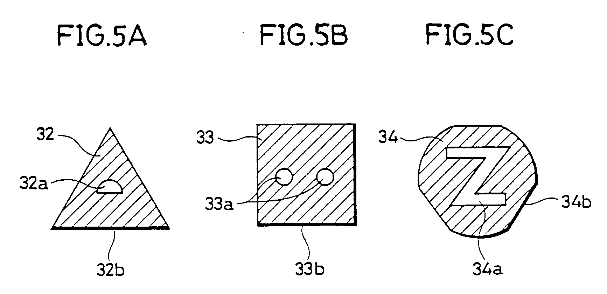

Referring to Fig. 5A, a through hole 32a semi-circular in cross-section is formed in an electrode 32 for electric discharge machining having the form of a triangular bar. Referring to Fig. 5B, two through holes 33a circular in cross-section are formed in an electrode 33 for electric discharge machining having the form of a square bar. Referring to Fig. 5C, a through hole 34a Z-shaped in cross-section is formed in a cylindrical electrode 34 for electric discharge machining, and three flat surfaces 34b are formed as outer surfaces. The electrode for electric discharge machining shown in Figs. 5A, 5B and 5C have the through holes as the discharge machining liquid inlet paths and the flat outer surfaces has the discharge machining liquid outlet paths, and thus those electrodes are embodiments of electrodes for electric discharge machining according to the present invention.

Although the present invention has been described and illustrated in detail, it is clearly understood that the same is by way of illustration and example only and is not to be taken by way of limitation, the present invention being limited only by the terms of the appended claims.

## Claims

1. An electrode (1-8, 32-34) for electric discharge machining for performing electric discharge machining while supplying a discharge machining liquid (9) to an object (11), comprising a discharge machining liquid inlet path and a discharge machining liquid outlet path wherein
the discharge machining liquid inlet path is formed by a penetrating hole (1a-8a, 32a-34a) in a longitudinal direction of the electrode, and
the discharge machining liquid outlet path (1b-8b, 32b-34b) is formed to extend in the longitudinal direction on an outer surface of the electrode (1-8, 32-34), wherein the electrode is used in a rotating manner and the through hole (1a-8a, 32a-34a) of said discharge machining liquid inlet path is formed in a position away from the center of rotation of the electrode (1-8, 32-34).

2. Electrode in accordance with claim 1, wherein the electrode is made of alloys of tungsten-copper or silver-tungsten.

3. The electrode for electric discharge machining in accordance with claims 1 and 2, wherein the electrode is formed as a circular cylinder.

4. The electrode for electric discharge machining in accordance with claim 3, wherein said discharge machining liquid outlet path is a groove (1b) formed straight in the longitudinal direction of the outer surface of the electrode (1).

5. The electrode for electric discharge machining in accordance with claim 3, wherein said discharge machining liquid outlet path is a groove (2b) formed spirally in the longitudinal direction of the outer surface of the electrode (2)

6. The electrode for electric discharge machining in accordance with claim 3, wherein said discharge machining liquid outlet path is a flat surface (5b, 34b) formed on the outer surface of the electrode (5, 34)

7. The electrode for electric discharge machining in accordance with claim 1 and 2, wherein the electrode (7, 33) has a square bar form.

8. The electrode for electric discharge machining in accordance with claim 7, wherein said discharge machining liquid outlet path is a flat outer surface (7b, 33b) of the square bar.

9. The electrode for electric discharge machining in accordance with claim 1 and 2, wherein a plurality of through holes (5a, 33a) are formed as said discharge machining liquid inlet path.

## Patentansprüche

1. Elektrode (1-8, 22-34) zur Elektroentladungsbearbeitung, um eine Bearbeitung durch elektrische Entladung durchzuführen, während eine Entladungs-Bearbeitungsflüssigkeit (9) zu einem Werkstück (11) zugeführt wird, wobei die Elektrode enthält:
- einen Einlaßweg für die Entladungs-Bearbeitungsflüssigkeit und einen Auslaßweg für die Entladungs-Bearbeitungsflüssigkeit, wobei
- der Einlaßweg für die Entladungs-Bearbeitungsflüssigkeit durch eine durchgehenden Bohrung (1a-8a, 32a-34a) in einer Längsrichtung der Elektrode gebildet ist, und
- der Auslaßweg für die Entladungs-Bearbeitungsflüssigkeit (1b-8b, 32b-34b) so gebildet ist, daß er sich in Längsrichtung auf einer äußeren Oberfläche der Elektrode (1-8, 32-34) erstreckt, wobei die Elektrode in sich drehender Weise verwendet wird und die Durchgangsbohrung (1a-8a, 32a-34a) des Einlaßwegs für die Entladungs-Bearbeitungsflüssigkeit an einer von dem Rotationszentrum der Elektrode (1-8, 32-34) entfernten Stelle gebildet ist.

2. Elektrode nach Anspruch 1, **dadurch gekennzeichnet, daß** die Elektrode aus Legierungen aus Wolfram-Kupfer oder Silber-Wolfram hergestellt ist.

3. Elektrode zur Elektroentladungsbearbeitung nach den Ansprüchen 1 und 2, **dadurch gekennzeichnet, daß** die Elektrode als kreisförmiger Zylinder ausgebildet ist.

4. Elektrode zur Elektroentladungsbearbeitung nach Anspruch 3, **dadurch gekennzeichnet, daß** der Auslaßweg für die Entladungs-Bearbeitungsflüssigkeit eine Nut (1b) ist, die gerade in Längsrichtung der Außenfläche der Elektrode (1) gebildet ist.

5. Elektrode zur Elektroentladungsbearbeitung nach Anspruch 3, **dadurch gekennzeichnet, daß** der Auslaßweg für die Entladungs-Bearbeitungsflüssigkeit eine Nut (2b) ist, die spiralenförmig in Längsrichtung der Außenfläche der Elektrode (2) gebildet ist.

6. Elektrode zur Elektroentladungsbearbeitung nach Anspruch 3, **dadurch gekennzeichnet, daß** der Auslaßweg für die Entladungs-Bearbeitungsflüssigkeit eine auf der Außenfläche der Elektrode (5, 34) gebildete flache Fläche (5b, 34b) ist.

7. Elektrode zur Elektroentladungsbearbeitung nach den Ansprüchen 1 und 2, **dadurch gekennzeichnet, daß** die Elektrode (7, 33) die Form einer quadratischen Stange hat.

8. Elektrode zur Elektroentladungsbearbeitung nach Anspruch 7, **dadurch gekennzeichnet, daß** der Auslaßweg für die Entladungs-Bearbeitungsflüssigkeit eine flache äußere Fläche (7b, 33b) des quadratischen Stange ist.

9. Elektrode zur Elektroentladungsbearbeitung nach den Ansprüchen 1 und 2, **dadurch gekennzeichnet, daß** eine Vielzahl von Durchgangsbohrungen (5a, 33a) als Einlaßweg für die Entladungs-Bearbeitungsflüssigkeit gebildet sind.

## Revendications

1. Electrode (1 à 8, 32 à 34) pour l'usinage par électro-érosion pour effectuer l'usinage par électroérosion en amenant un liquide d'usinage par décharges (9) à un objet (11), comprenant un chemin d'admission de liquide d'usinage par décharges et un chemin d'évacuation de liquide d'usinage par décharges, dans laquelle le chemin d'admission de liquide d'usinage par décharges est formé par un trou traversant (1a à 8a, 32a à 34a) dans un sens longitudinal de l'électrode, et le chemin d'évacuation de liquide d'usinage par décharges (1b à 8b, 32b à 34b) est formé pour s'étendre dans le sens longitudinal sur une surface extérieure de l'électrode (1 à 8, 32 à 34), dans laquelle l'électrode est utilisée de manière rotative et le trou traversant (1a à 8a, 32a à 34a) dudit chemin d'admission de liquide d'usinage par décharges est formé en une position distante du centre de rotation de l'électrode (1 à 8, 32 à 34).

2. Electrode selon la revendication 1, dans laquelle l'électrode est faite d'alliages de tungstène-cuivre ou d'argent-tungstène.

3. Electrode pour l'usinage par électro-érosion selon les revendications 1 et 2, dans laquelle l'électrode est formée en tant que cylindre circulaire.

4. Electrode pour l'usinage par électro-érosion selon la revendication 3, dans laquelle ledit chemin d'évacuation de liquide d'usinage par décharges est une rainure (1b) formée droite dans le sens longitudinal de la surface extérieure de l'électrode (1).

5. Electrode pour l'usinage par électro-érosion selon la revendication 3, dans laquelle ledit chemin d'évacuation de liquide d'usinage par décharges est une rainure (2b) formée en spirale dans le sens longitudinal de la surface extérieure de l'électrode (2).

6. Electrode pour l'usinage par électro-érosion selon la revendication 3, dans laquelle ledit chemin d'évacuation de liquide d'usinage par décharges est une surface plate (5b, 34b) formée sur la surface extérieure de l'électrode (5, 34).

7. Electrode pour l'usinage par électro-érosion selon les revendications 1 et 2, dans laquelle l'électrode (7, 33) a une forme de barreau carré.

8. Electrode pour l'usinage par électro-érosion selon la revendication 7, dans laquelle ledit chemin d'évacuation de liquide d'usinage par décharges est une surface extérieure plate (7b, 33b) du barreau carré.

9. Electrode pour l'usinage par électro-érosion selon les revendications 1 et 2, dans laquelle une pluralité de trous traversants (5a, 33a) est formée en tant que ledit chemin d'admission de liquide d'usinage par décharges.
